# EUROPEAN PATENT APPLICATION

(11) **EP 3 817 105 A1**
(43) Date of publication of application: **05.05.2021**
(21) Application number: 20205025.8
(22) Date of filing: 30.10.2020
(51) Int. Cl.: H01M 4/525, H01M 4/58, H01M 4/36, H01M 4/131, H01M 4/1315, H01M 10/052, H01M 4/02

(54) **POSITIVE ACTIVE MATERIAL FOR RECHARGEABLE LITHIUM BATTERY, METHOD OF PREPARING THE SAME, AND RECHARGEABLE LITHIUM BATTERY INCLUDING THE SAME**

(30) Priority: 31.10.2019 KR 20190137853; 29.09.2020 KR 20200127324; 29.10.2020 KR 20200141836
(71) Applicant: Samsung SDI Co., Ltd., Yongin-si, Gyeonggi-do 17084 (KR)
(72) Inventor: KIL, Donghyun, 17084 Yongin-si (KR)
(74) Representative: Shearman, James Ward

(57) **Abstract**

Disclosed are a positive active material for a rechargeable lithium battery including a lithium nickel-based composite oxide including a large-diameter particle and a small-diameter particle having different average particle diameters, wherein the large-diameter particle includes secondary particles including a plurality of primary particles and the small-diameter particle includes lithium halide, and the large-diameter particle has an average particle diameter (D50) of 10 µm to 20 µm, and the small-diameter particle has an average particle diameter (D50) of 1 µm to 8 µm, a method of preparing the same, and a rechargeable lithium battery including the same.

## Description

### BACKGROUND OF THE INVENTION

### (a) Field of the Invention

A positive active material for a rechargeable lithium battery, a method of preparing the same, and a rechargeable lithium battery including the same are disclosed.

### (b) Description of the Related Art

As portable electronic devices, communication devices, and the like are developed, there are needs for development of a rechargeable lithium battery having a high energy density.

This rechargeable lithium battery includes a positive electrode and a negative electrode which include an electrode active material layer including an electrode active material formed on an electrode current collector. The positive active material is mostly an intercalation material of lithium ions, and may be oxides such as lithium cobalt oxide (LiₓCoO₂), lithium nickel oxide (LiₓNiO₂), lithium nickel cobalt oxide (Liₓ(NiCo)O₂), lithium nickel cobalt manganese oxide (Liₓ(NiCoMn)O₂), spinel-type lithium manganese oxide (LiₓMn₂O₄), manganese dioxide (MnO₂), or olivine-type or NASICON-type phosphates such as lithium iron phosphate (LiₓFePO₄), lithium manganese phosphate (LiₓMnPO₄), and the like, silicates, a polymer material, and the like.

The negative active material may be a compound capable of intercalating lithium metal, its alloy or lithium ion, and may be a polymer material or a carbon material, for example a graphite-based material such as artificial or natural graphite, and the like, non-graphitizable carbon, or graphitizable carbon, carbon nanotube (CNT), a carbon nanofiber (CNF), or a carbon nanowall (CNW).

On the other hand, the positive active material having a porous structure has a large BET specific surface area and thus exhibits a very high residual lithium level on the surface. Accordingly, a side reaction such as gas generation occurs and ultimately deteriorates stability of the battery.

According to a conventional art, in order to reduce residual lithium, a washing process of the positive active material is performed but requires an additional cost for the washing and in addition, does damage on the surface thereof and the like and resultantly, deteriorates performance of the battery. In addition, in order to reduce the residual lithium, an additional coating process of the positive active material is performed but still has problems of deteriorating rate capability, capacity characteristics, and the like of the battery.

### SUMMARY OF THE INVENTION

An embodiment provides a positive active material for a rechargeable lithium battery having reduced residual lithium and generation of gas on the surface of an active material and an improved mixture density.

Another embodiment provides a method of preparing the positive active material for a rechargeable lithium battery.

Another embodiment provides a rechargeable lithium battery including the positive active material for a rechargeable lithium battery.

An embodiment provides a positive active material for a rechargeable lithium battery including a lithium nickel-based composite oxide including a large-diameter particle and a small-diameter particle having different average particle diameters, wherein the large-diameter particle includes secondary particles including a plurality of primary particles, the small-diameter particle includes lithium halide, and the large-diameter particle has an average particle diameter (D50) of about 10 µm to about 20 µm and the small-diameter particle has an average particle diameter (D50) of about 1 µm to about 8 µm.

The small-diameter particle may include secondary particles including a plurality of primary particles.

The small-diameter particle may include single crystal particles.

The large-diameter secondary particle may include primary particles having an average thickness of about 100 nm to about 200 nm, and the average thickness of the primary particles included in the small-diameter secondary particle may be about 200 nm to about 500 nm.

The large-diameter particle may be included in an amount of about 50 wt% to about 90 wt% based on a total weight of the large-diameter particle and the small-diameter particle.

The lithium halide may be coated on the surface of the small-diameter particle.

The lithium halide may be coated in the form of a film on the surface of the small-diameter particle.

The lithium halide may include LiF.

The lithium halide may be included in an amount of about 0.1 mol to about 1.0 mol based on 100 mol of the small-diameter particle.

The large-diameter particle and the small-diameter particle may include secondary particles in which a plurality of plate-shaped primary particles are aggregated, and may have a regular array structure in which (003) planes of the primary particles are oriented in a direction perpendicular to the surface of the secondary particles.

The positive active material may have a full width at half maximum (FWHM) of a (003) plane peak in an X-ray diffraction spectrum analysis of about 0.15° to about 0.17°.

The large-diameter particle and the small-diameter particle may have a one-centered radial arrangement having one center or a multi-centered radial array structure having a plurality of centers.

The lithium nickel-based composite oxide may be a compound represented by Chemical Formula 1.

[Chemical Formula 1] LiₐNiₓCo_{y}M_{1-x-y}O₂

In Chemical Formula 1, 0.9 ≤ a ≤ 1.05, 0.3 ≤ x ≤ 0.95, 0.05 ≤ y ≤0.3, and M is at least one metal element selected from Mn, Al, Cr, Fe, V, Mg, Ti, Zr, Nb, Mo, W, Cu, Zn, Ga, In, Sn, La, and Ce.

The positive active material may include about 1,400 ppm or less of residual lithium on the surface.

The positive active material may have a mixture density of about 3.1 g/cm³ to about 3.4 g/cm³.

Another embodiment provides a method of preparing a positive active material for a rechargeable lithium battery that includes preparing a large-diameter metal hydroxide precursor and a small-diameter metal hydroxide precursor; mixing the large-diameter metal hydroxide precursor and a lithium raw material and heat-treating the mixture to prepare a large-diameter particle; mixing the small-diameter metal hydroxide precursor, a lithium raw material, and a raw material of lithium halide (LiX) and heat-treating the mixture to prepare a small-diameter particle including lithium halide; and mixing the large-diameter particle and the small-diameter particle to prepare a positive active material.

Another embodiment provides a rechargeable lithium battery including a positive electrode including the positive active material; a negative electrode including a negative active material; and an electrolyte.

At least some of the above and other features of the invention are set out in the claims.

The positive active material may have an improved mixture density by including the large-diameter particle and small-diameter particle having different average particle diameters.

Residual lithium on the surface of the positive active material may be reduced and gas generation may be suppressed due to the positive active material including lithium halide, thereby providing a rechargeable lithium battery with improved cycle-life characteristics.

### BRIEF DESCRIPTION OF THE DRAWINGS

FIG. 1 is a schematic view showing a positive active material in which a large-diameter secondary particle and a small-diameter secondary particle are mixed.
FIG. 2 is a schematic view showing a positive active material in which a large-diameter secondary particle and a small-diameter single crystal particle are mixed.
FIG. 3 is a schematic view showing oriented primary particles constituting a large-diameter secondary particle.
FIG. 4 is a schematic view showing the shapes of the primary particles according to embodiments of the present disclosure.
FIG. 5 is a perspective view that schematically shows a representative structure of a rechargeable lithium battery.
FIG. 6 is a graph showing gas generation amounts at a high temperature in the coin cells manufactured according to Example 2-1 to Example 2-3, Example 3 and Comparative Example 2.

### DETAILED DESCRIPTION OF THE EMBODIMENTS

Hereinafter, embodiments of the present invention are described in detail. However, the present disclosure is not limited to these embodiments and the present disclosure is defined by the scope of claims.

As used herein, the "large-diameter secondary particle" and the "small-diameter secondary particle" refer to each "a large-diameter lithium nickel-based composite oxide secondary particle" and "a small-diameter lithium nickel-based composite oxide secondary particle".

As used herein, the "secondary particle" refers to "a large-diameter lithium nickel-based composite oxide secondary particle" or "a small-diameter lithium nickel-based composite oxide secondary particle" and the "primary particle" refers to "a large-diameter lithium nickel-based composite oxide primary particle" or "a small-diameter lithium nickel-based composite oxide primary particle."

The secondary particles, for example, may be relatively large-sized particles including a plurality of physically and/or chemically aggregated primary particles and the primary particles and secondary particles may be mixed or secondary particles alone may be present. In addition, as used herein, D50 refers to a particle diameter (e.g. an average particle diameter) of a particle corresponding to the ranking of 50% of the total number of particles when the measured particles are arranged in the order of particle diameter from small to large. The particle diameter may be, for example, measured by an electron microscopy examination using a scanning electron microscopy (SEM) or a field emission scanning electron microscopy (FE-SEM), or a laser diffraction method. It may be measured by the laser diffraction method as follows. The particles to be measured are dispersed in a dispersion medium and then introduced into a commercially available laser diffraction particle size measuring apparatus (for example, MT 3000 of Microtrac), ultrasonic waves of about 28 kHz are irradiated with an output of about 60W, and an average particle diameter (D50) in 50% reference of the particle size distribution in a measuring apparatus may be calculated.

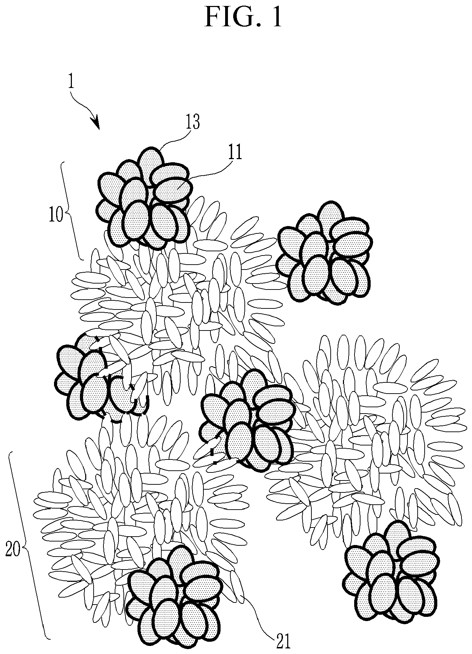

Hereinafter, a positive active material according to an embodiment is described with reference to FIGS. 1 to 4.

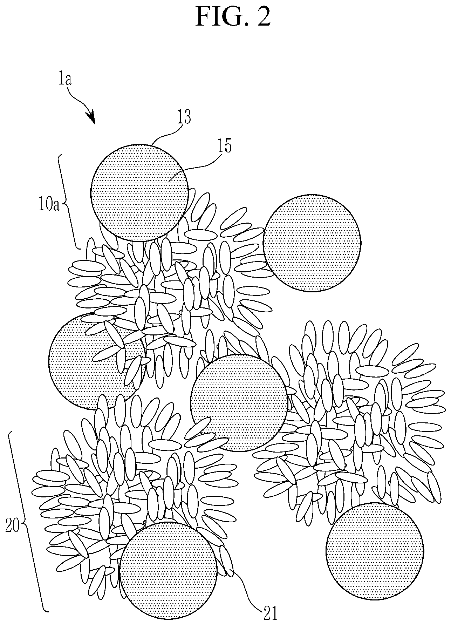

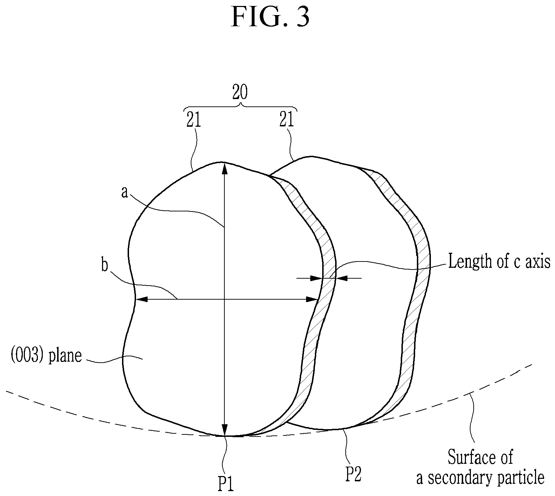

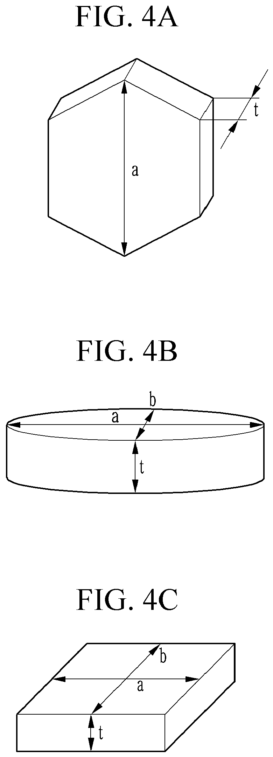

FIG. 1 is a schematic view showing a positive active material in which a large-diameter secondary particle and a small-diameter secondary particle are mixed, FIG. 2 is a schematic view showing a positive active material in which a large-diameter secondary particle and a small-diameter single crystal particle are mixed, and FIG. 3 is a schematic view showing oriented primary particles constituting a large-diameter secondary particle. FIG. 4 is a schematic view showing the sheet-shapes of the primary particles.

Specifically, the positive active material for a rechargeable lithium battery according to an embodiment includes a lithium nickel-based composite oxide including a large-diameter particle and a small-diameter particle having different average particle diameters.

The large-diameter particle includes secondary particles including a plurality of primary particles and the small-diameter particle may include single crystal particles 10a, secondary particles 10 including a plurality of primary particles, or a combination thereof.

Herein, a single crystal particle refers to a structure of a monolith that exists as an independent phase in which particles are not agglomerated with each other in a morphology phase and exists alone without a grain boundary inside the particle, and may be formed of one particle.

Referring to FIG. 1, the positive active material 1 according to an embodiment may include a lithium nickel-based composite oxide including the large-diameter secondary particles 20 and the small-diameter secondary particles 10. In addition, referring to FIG. 2, the positive active material 1a according to an embodiment may include a lithium nickel-based composite oxide including the large-diameter secondary particles 20 and the small-diameter single crystal particles 10a having different average particle diameters. In the case of including the large-diameter secondary particles, and the small-diameter secondary particles or the small-diameter single crystal particles, a mixture density of the positive active material may be improved. The large-diameter particle and the small-diameter particle may include secondary particles in which a plurality of plate-shaped primary particles are aggregated and may have a regular array structure in which (003) planes of the primary particles are oriented in a direction perpendicular to the surface of the secondary particles.

The array structure of the primary particles is described with reference to FIG. 3. Hereinafter, the large-diameter secondary particle 20 will be described with reference to FIG. 3, but it is obvious that the small-diameter secondary particle 10 may also be applied in the same manner. Specifically, the (003) planes of the primary particles 21 may be oriented in a direction perpendicular to the surface of the secondary particle 20. The surface refers to the outermost surface of the secondary particle 20. The (003) plane refers to a lattice plane corresponding to the Miller index (003). The perpendicular direction means that a long axis (a axis) or a short axis (b axis) of the (003) plane and the surface of the secondary particle cross each other at an angle of about 70 ° to about 110 °, for example about 80 ° to about 100 °. When the (003) planes of the primary particles 21 are oriented so as to be perpendicular to the surface of the secondary particle 20, a relatively large number of lithium diffusion passages between boundaries are formed on a surface side of the secondary particle 20 and a lithium diffusion degree may be increased by exposing a large amount of the crystal planes capable of lithium transport. Therefore, high initial efficiency and capacity may be secured. In addition, occurrence of cracks may be suppressed by suppressing a stress caused by volume changes of the secondary particle 20 during charging and discharging, and cycle-life characteristics of the battery may be improved.

In the positive active material according to an embodiment, a full width at half-maximum (FWHM) of the peak of the (003) plane may be about 0.15 ° to about 0.17 ° in an X-ray diffraction spectrum analysis. As used herein, the full width at half-maximum (FWHM) means a numerical value of a peak width at a position of 1/2 of the maximum peak intensity of the (003) plane obtained by X-ray diffraction spectrum analysis (XRD) of the positive active material. When the full width at half-maximum of the (003) plane is within the above range, the size of the small-diameter particles included in the positive active material increases, high initial efficiency and capacity characteristics of the rechargeable lithium battery including the positive active material are improved, and during charging and discharging of a rechargeable lithium battery, deformation due to a change in volume of the large-diameter and small-diameter particles may be suppressed, thereby suppressing the occurrence of cracks in the battery.

The large-diameter secondary particles 20 and/or small-diameter secondary particles 10 may have a one-centered radial arrangement having one center or a multi-centered radial array structure having a plurality of centers. The primary particles 21 oriented as described above are aggregated with each other to form the secondary particles 20. For example, the plurality of primary particles 21 may be aggregated with each other to provide secondary particles 20 having a radial array structure. The plurality of primary particles 21 may be oriented toward one center so as to form a face contact along the c-axis (thickness) direction of the primary particles 21, to provide the secondary particles 20 having a radial array structure. In another embodiment, the large-diameter secondary particles 20 may have a multi-centered radial array structure having a plurality of centers. When the large-diameter secondary particles 20 have a one-centered or multi-centered radial array structure as described above, lithium may be easily intercalated/deintercalated into the center of the large-diameter secondary particles 20.

The lithium nickel-based composite oxide may be a compound represented by Chemical Formula 1:

[Chemical Formula 1] LiₐNiₓCo_{y}M_{1-x-y}O₂

In Chemical Formula 1, 0.9 ≤ a ≤ 1.05, 0.3 ≤ x ≤ 0.95, 0.05 ≤ y ≤0.3, and M is at least one metal element selected from Mn, Al, Cr, Fe, V, Mg, Ti, Zr, Nb, Mo, W, Cu, Zn, Ga, In, Sn, La, and Ce.

In Chemical Formula 1, 0.98 ≤ a ≤ 1.02, 0.5 ≤ x ≤ 0.8, 0.1 ≤ y ≤0.3, or 0.98 ≤ a ≤ 1.02, 0.6 ≤ x ≤ 0.8, 0.1 ≤ y ≤0.3, and M may be Mn or Al.

For example, the lithium nickel-based composite oxide may be at least one selected from LiNi_{0.5}Co_{0.2}Mn_{0.3}O₂, LiNi_{0.6}Co_{0.2}Mn_{0.2}O₂, and LiNi_{0.8}Co_{0.1}Mn_{0.1}O₂.

The small-diameter particles 10 and 10a include lithium halide 13. When the lithium halide 13 is included in the small-diameter particles 10 and 10a, residual lithium generated on the surface of the positive active material may be reduced and gas generation due to side reactions may be suppressed. Therefore, cycle-life characteristics of the battery may be improved by preventing a side reaction between the positive active material and the electrolyte during battery operation.

Specifically, when the positive active materials 1 and 1a include the lithium halide 13 only in small-diameter particles (i.e., the small-diameter single crystal particle 10a, the small-diameter secondary particles 10, and/or the primary particles 11 constituting the small-diameter secondary particles), the aforementioned effect may be significantly obtained, compared with when the lithium halide is included in the large-diameter secondary particles 20 or simultaneously in the large-diameter secondary particles 20 and the small-diameter particles. The small-diameter particles 10 and 10a have a larger BET (Brunauer-Emmett-Teller) specific surface area per unit weight and exhibit more residual lithium and more gas generation, compared with the large-diameter secondary particles 20. In other words, when the lithium halide is included in the small-diameter secondary particles 10 and 10a alone, the residual lithium generation and the gas generation may be efficiently suppressed with a relatively smaller amount of lithium halide.

On the other hand, the lithium halide 13 may be coated on at least one of the small-diameter single crystal particles 10a, the small-diameter secondary particles 10, and the primary particles 11 constituting the small-diameter secondary particles 10. For example, the lithium halide 13 may be coated on the surface of the small-diameter single crystal particles 10a; both of the surfaces of the small-diameter secondary particles 10 and the primary particles 11 constituting the small-diameter secondary particles 10; or on the surface of the small-diameter primary particles 11 alone. Accordingly, the lithium halide 13 may increase the average particle diameter (D50) of the small-diameter particles and thus reduce the BET specific surface area of the small-diameter particles. Accordingly, the residual lithium generation and the gas generation may be efficiently suppressed on the surface of the positive active material. The lithium halide 13 may be coated in a film form on at least one surface of the small-diameter single crystal particles 10a, the small-diameter secondary particles 10, and primary particles 11 constituting the small-diameter secondary particles 10. According to the method of preparing the positive active material according to an embodiment, the lithium halide 13 may be uniformly coated in a film form on the surface of the particles. The lithium halide 13 may work as a flux during the firing of the positive active material at a high temperature and thus promote growth of the primary particles 11 and more effectively improve the BET specific surface area of the particles.

The lithium halide 13 may include at least one selected from LiF, LiCI, LiBr, and Lil, and in an embodiment, LiF may be desirably used.

The lithium halide 13 may be used in an amount of about 0.1 mols to about 1.0 mols, for example, about 0.2 mols to about 0.8 mols, or about 0.25 mols to about 0.75 mols based on about 100 mols of the small-diameter particle. When the amount of lithium halide 13 is out of the ranges, cycle-life degradation of a rechargeable lithium battery including the positive active material may be accelerated, and the lithium halide 13 should be appropriately adjusted within the ranges.
The large-diameter particle has an average particle diameter (D50) of about 10 µm to about 20 µm, for example, greater than or equal to about 10 µm, greater than or equal to about 11 µm, greater than or equal to about 12 µm, greater than or equal to about 13 µm, or greater than or equal to or about 14 µm and less than or equal to about 20 µm, less than or equal to about 19 µm, less than or equal to about 18 µm, less than or equal to about 17 µm, less than or equal to about 16 µm, or less than or equal to about 15 µm. The small-diameter particle has an average particle diameter (D50) of about 1 µm to about 8 µm, for example, greater than or equal to about 1 µm, greater than or equal to about 2 µm, greater than or equal to about 3 µm, or greater than or equal to about 4 µm and less than or equal to about 8 µm, less than or equal to about 7 µm, less than or equal to about 6 µm, or less than or equal to about 5 µm. When the large-diameter particle and the small-diameter particle have the average particle diameters respectively within the ranges, mixture density of the positive active material may be increased. Accordingly, capacity characteristics of the battery may be improved.
The large-diameter particle (D50) and the small-diameter particle (D50) may have an average particle diameter difference (D50-D50) of about 9 µm to about 12 µm, for example, about 9 µm to about 10 µm. Accordingly, the mixture density of the positive active material is increased, and the capacity characteristics of the battery may be improved.

The primary particles 21 comprising the large-diameter secondary particles 20 may have an average particle diameter of about 200 nm to about 900 nm, for example, 200 nm to 800 nm, or 200 nm to 700 nm, or 300 nm to 600 nm, or 300 nm to 500 nm. The primary particles 11 constituting the small-diameter secondary particle may have an average particle diameter of about 100 nm to about 900 nm, for example, 100 nm to 800 nm, or 100 nm to 700 nm, or 100 nm to 600 nm, or 100 nm to 500 nm. When the primary particles 21 comprising the large-diameter secondary particles 20 and the primary particles 11 constituting the small-diameter secondary particle have the average particle diameter with the ranges, high initial efficiency and capacity may be obtained, and crack generation may be suppressed during the charge and discharge by suppressing stress according to volume changes of the secondary particles. The average particle diameter of primary particles may be measured by an electron microscopy examination using a scanning electron microscopy or a field emission scanning electron microscopy.

The primary particles 21 comprising the large-diameter secondary particles 20 and the primary particles 11 constituting the small-diameter secondary particle 10 may be sheet-shaped. FIG. 4 is a schematic view showing the shapes of the primary particles according to the embodiments of the present disclosure. Referring to FIG. 4, a primary particle according to the embodiments of the present disclosure may have any suitable shape, such as (A) a polygonal nanoplate shape (such as a hexagon and/or the like), (B) a nanodisk shape, and/or (C) a rectangular parallelepiped shape, each having a basic sheet-shaped structure.

In FIG.4 "a" refers to a long-axis length, e.g., the length of its longest axis (e.g., plane direction long-axis), "b" refers to a short-axis length, e.g., the length of its shortest axis (e.g., plane direction short-axis), and "t" refers to a thickness. The thickness t of the primary particles may be smaller than the plane direction lengths a and b. The length a in the plane direction may be larger than b or may be the same as b. The long-axis length, the short-axis length, and the thickness of the primary particles may be measured by an electron microscopy examination using a scanning electron microscopy or a field emission scanning electron microscopy.

The primary particles 21 comprising the large-diameter secondary particles 20 may have an average thickness of about 100 nm to about 200 nm, for example, about 100 nm to about 150 nm, greater than or equal to about 100 nm, greater than or equal to about 110 nm, greater than or equal to about 120 nm, or greater than or equal to about 130 nm and less than or equal to about 200 nm, less than or equal to about 190 nm, less than or equal to about 180 nm, or less than or equal to about 170 nm, or less than or equal to about 160 nm, or less than or equal to about 150 nm. When the large-diameter primary particle 21 has the average thickness with the ranges, high initial efficiency and capacity may be secured, and crack generation may be suppressed during the charge and discharge by suppressing stress according to volume changes of the secondary particles. Accordingly, the cycle-life characteristics may be improved.

The primary particles 21 comprising the large-diameter secondary particles 20 may have an average long-axis length of about 200 nm to about 900 nm, for example, 200 nm to 800 nm, or 200 nm to 700 nm, or 300 nm to 600 nm, or 300 nm to 500 nm. When the primary particles 21 comprising the large-diameter secondary particles 20 has the average long-axis length with the ranges, high initial efficiency and capacity may be obtained, and crack generation may be suppressed during the charge and discharge by suppressing stress according to volume changes of the secondary particles.

The primary particles 11 agglomerated in the small-diameter secondary particles 10 may have an average thickness of about 200 nm to about 500 nm, for example, greater than or equal to about 200 nm, greater than or equal to about 210 nm, greater than or equal to about 220 nm, or greater than or equal to about 230 nm and less than or equal to about 500 nm, less than or equal to about 490 nm, less than or equal to about 480 nm, or less than or equal to about 470 nm. When the primary particles 11 constituting the small-diameter secondary particles 10 have the average thickness within the ranges, high initial efficiency and capacity characteristics of a rechargeable lithium battery including the positive active material may be improved, and crack generation may be suppressed by suppressing the volume changes of the secondary particles during the charge and discharge of the rechargeable lithium battery.

The primary particles 11 constituting the small-diameter secondary particle may have an average long-axis length of about 100 nm to about 900 nm, for example, 100 nm to 800 nm, or 100 nm to 700 nm, or 100 nm to 600 nm, or 100 nm to 500 nm. When the primary particles 11 constituting the small-diameter secondary particle have the average long-axis length with the ranges, high initial efficiency and capacity may be obtained, and crack generation may be suppressed during the charge and discharge by suppressing stress according to volume changes of the secondary particles.

The average thickness of particles may be measured by an electron microscopy examination using a scanning electron microscopy or a field emission scanning electron microscopy.

The large-diameter secondary particles 20 may have a BET specific surface area of about 0.100 m²/g to about 0.600 m²/g, for example, greater than or equal to about 0.100 m²/g, greater than or equal to about 0.200 m²/g, or greater than or equal to about 0.300 m²/g and less than or equal to about 0.600 m²/g, less than or equal to about 0.500 m²/g, or less than or equal to about 0.400 m²/g. When the large-diameter secondary particles 20 have the BET specific surface area within the ranges, high initial efficiency and capacity may be secured, and crack generation may be suppressed by suppressing stress according to the volume changes of the secondary particles during the battery charge and discharge. Accordingly, the cycle-life characteristics of the battery may be improved.

The small-diameter secondary particles 10 may have a BET specific surface area of about 0.300 m²/g to about 1.000 m²/g, for example, greater than or equal to about 0.300 m²/g, greater than or equal to about 0.400 m²/g, or greater than or equal to about 0.500 m²/g and less than or equal to about 1.000 m²/g, less than or equal to about 0.900 m²/g, less than or equal to about 0.800 m²/g, or less than or equal to about 0.700 m²/g. When the small-diameter secondary particles 10 have the BET specific surface area within the ranges, a residual lithium compound level on the surface may be lowered, and gas generation may be reduced by decreasing a side reaction on the surface of the positive active material during the operation of the battery.

The large-diameter particle may be included in an amount of about 50 wt% to about 90 wt%, for example, greater than or equal to about 50 wt%, greater than or equal to about 55 wt%, greater than or equal to about 60 wt%, or greater than or equal to about 65 wt% and less than or equal to about 90 wt%, less than or equal to about 85 wt%, less than or equal to about 80 wt%, or less than or equal to about 75 wt% based on a total weight of the large-diameter particle and the small-diameter particle.

The positive active materials 1 and 1a may include residual lithium of less than or equal to about 1,400 ppm on the surface, for example, less than or equal to about 1,350 ppm, less than or equal to about 1,300 ppm, less than or equal to about 1,290 ppm, less than or equal to about 1,280 ppm, less than or equal to about 1,270 ppm, less than or equal to about 1,260 ppm, less than or equal to about 1,250 ppm, less than or equal to about 1,230 ppm, less than or equal to about 1,200 ppm, or less than or equal to about 1,150 ppm.

The positive active materials 1 and 1a may have mixture density of about 3.1 g/cm³ to about 3.4 g/cm³ or about 3.2 g/cm³ to about 3.3 g/cm³. As the positive active materials 1 and 1a include the large-diameter particle and the small-diameter particle having different average particle diameters, mixture density thereof may be improved.

Hereinafter, a method of preparing a positive active material according to an embodiment is provided.

A method of preparing a positive active material for a rechargeable lithium battery includes preparing a large-diameter metal hydroxide precursor and a small-diameter metal hydroxide precursor; mixing the large-diameter metal hydroxide precursor and a lithium raw material and heat-treating the mixture to prepare a large-diameter particle; mixing the small-diameter metal hydroxide precursor, a lithium raw material, and a raw material of lithium halide (LiX) and heat-treating the mixture to prepare a small-diameter particle including lithium halide; and mixing the large-diameter particle and the small-diameter particle to prepare a positive active material.

In an embodiment, the large-diameter particles may be secondary particles including a plurality of primary particles, and the small-diameter particles may be single crystal particles, second particles including a plurality of primary particles, or a combination thereof.

The method of preparing the metal hydroxide precursor may be prepared in a first step, a second step, and a third step according to the steps of forming the structure of the core, the intermediate layer, and the shell. In the first step, the second step, and the third step, process conditions such as concentrations and input amounts of metal raw materials, concentrations, and input amounts of ammonia water as a complex agent, and input amounts of a pH controlling agent may be different.

On the other hand, a "core" refers to a region of about 65 length % to about 85 length % from the center of a total distance from the center to the surface of the secondary particles 10 and 20. For example, in the lithium nickel-based composite oxide, it may be a remaining region except a region within about 2 µm from the outermost of the lithium nickel-based composite oxide. In addition, a "shell" refers to a region of about 5 length % to about 15 length % from the outermost of a total surface from the center to the surface of the lithium nickel-based composite oxide or within about 2 µm of the outermost of the lithium nickel-based composite oxide. An "intermediate layer" refers to a remaining region except for the core and the shell. As used herein, the orientation of primary particles 11 and 21 may be predominantly in shells of the secondary particles 10 and 20.

### (First Step) Forming Core of Metal Hydroxide Precursor:

The complex agent and the pH controlling agent are put in a reactor, and the metal raw materials are added thereto and reacted. The agitation power of the reactor may be adjusted in the range of about 0.1 kW/m² to about 6 kW/m², for example, about 1 kW/m² to about 3 kW/m², and the reaction may be carried out for about 5 hours to about 30 hours or about 10 hours to about 30 hours.

The complex agent plays a role in controlling a reaction rate of formation of a precipitate in a co-precipitation reaction, and may be ammonia water and citric acid and in an embodiment, may be desirably ammonia water. An amount of the complex agent is used at a general level. For example, a concentration of the complex agent may be about 0.1 M to about 0.7 M, for example about 0.2 M to about 0.5 M.

The pH controlling agent may control the pH of the reaction mixture to form a precipitate from the reaction mixture, for example sodium hydroxide (NaOH), sodium carbonate (Na₂CO₃), sodium oxalate (Na₂C₂O₄), and the like, and the sodium hydroxide (NaOH) may be used desirably. If the pH of the reaction mixture in the reactor changes as the reaction proceeds, the pH may be controlled by adding a pH controlling agent as necessary, and the pH of the reaction mixture is controlled in the range of about 10 to about 12.

The metal raw material is obtained by mixing a nickel compound, a manganese compound, a cobalt compound, and the like in pure water and stirring them. A concentration of the metal raw material may be about 0.1 M to about 0.5 M, for example, about 0.3M, and an input amount of the metal raw material may be about 50 ml/min to about 100 ml/min.

Examples of the nickel compound may include Ni(OH)₂, NiO, NiOOH, NiCO₃·2Ni(OH)₂·4H₂O, NiC₂O₄·2H₂O, Ni(NO₃)₂·6H₂O, NiSO₄, NiSO₄·6H₂O, fatty acid nickel salts, or nickel halides. Among these, from the viewpoint of not generating harmful substances such as NOx and SOx during the firing process, it is desirable to use a nickel compound that does not contain nitrogen or sulfur atoms during firing treatment, and thus Ni(OH)₂, NiO, NiOOH, NiCO₃·2Ni(OH)₂·4H₂O, and NiC₂O₄-2H₂O are desirable. These nickel compounds may be used alone or in combination of two or more.

Examples of the manganese compound may be manganese oxide such as Mn₂O₃, MnO₂, and Mn₃O₄, manganese salts such as MnCO₃, Mn(NO₃)₂, MnSO₄, manganese acetate, manganese dicarboxylic acid, manganese citrate and fatty acid manganese salts, manganese oxyhydroxides, and manganese halides such as manganese chloride. Among these, MnO₂, Mn₂O₃, and Mn₃O₄ are desirable because they do not generate gases such as NOₓ and SOₓ and CO₂ during the firing process, and may be obtained inexpensively as industrial raw materials. These manganese compounds may be used alone or in combination of two or more.

Examples of the cobalt compound may include Co(OH)₂, CoOOH, CoO, Co₂O₃, Co₃O₄, Co(OCOCH₃)₂·4H₂O, CoCl₂, CO(NO₃)₂·6H₂O, and Co(SO₄)₂·7H₂O. Among these, from the viewpoint of not generating harmful substances such as NOx and SOx during the firing process, Co(OH)₂, CoOOH, CoO, Co₂O₃ and Co₃O₄ may be desirable. Co(OH)₂ and CoOOH are more desirable from the viewpoint of industrially inexpensive and high reactivity. These cobalt compounds may be used alone or in combination of two or more.

### (Second Step) Forming Intermediate Layer of Metal Hydroxide Precursor:

The metal raw material and the complex agent are added to a resulting material from the first step reaction, and after controlling pH of the reaction mixture, a reaction is performed.
Stirring power in the second step may be lowered, compared with that in the first step and the same as that in the third step. The stirring power of the second step is within the range of about 0.1 kW/m² to about 6 kW/m², for example, about 1 kW/m² to about 3 kW/m². The reaction time of the second step may be about 5 hours to about 30 hours or about 10 hours to about 30 hours.

The second step may be performed under specific conditions of using the complex agent, for example, at a concentration of about 0.3 M to about 1.0 M at about 8 ml/min to about 20 ml/min or about 8 ml/min to about 12 ml/min and injecting the metal raw material at about 90 ml/min to about 120 ml/min. In the second step, the amounts and concentrations of the metal raw material and the complex agent are increased in order to prevent a growth rate decrease according to growth of the particles after the reaction of the product from the first step for a certain period of time.

### (Third Step) Preparing Final Metal Hydroxide Precursor including Forming Shell of Metal Hydroxide Precursor:

After adding the metal raw material and the complex agent to a resulting material of the second step reaction and then, controlling pH of the reaction mixture, a reaction of forming a shell of the metal hydroxide precursor is performed, and the obtained precursor is several times washed with deionized water (DI water), filtered under a reduced pressure, and finally dried at a high temperature of greater than or equal to about 80 °C to prepare a metal hydroxide precursor.

The metal hydroxide precursor appropriately maintains porosity between (001) crystal planes, as exposure of the (001) crystal planes is minimized, and thus may have excellent structural stability.
The stirring power of the third step may be lowered, compared with that of the first step, and the same as that of the second step. The stirring power of the third step may be within the range of about 0.1 kW/m² to about 6 kW/m², for example, about 1 kW/m² to about 3 kW/m². The reaction time of the third step may be performed for about 3 hours to about 30 hours or about 10 hours to about 30 hours.

The amounts and concentrations of the metal raw material and the complex agent are increased in order to prevent a growth rate decrease according to the growth of the particles after a certain period of reaction of the reaction product from the second step.

The third step is performed under specific process conditions of using the complex agent at a concentration of about 0.35 M to about 1.0 M at about 12 ml/min to about 25 ml/min or about 12 ml/min to about 18 ml/min and then, injecting the metal raw material at about 120 ml/min to about 150 ml/min. These reaction conditions of the third step has lots of influences on surface depth of a porous layer in the metal hydroxide precursor.

Subsequently, the large-diameter metal hydroxide precursor and the lithium raw material are mixed and heat treated to prepare the large-diameter particles.

The large-diameter metal hydroxide precursor powder obtained by spray drying is sufficiently mixed with lithium raw materials such as Li₂CO₃, LiNO₃, LiNO₂, LiOH, LiOH·H₂O, LiH, LiF, LiCI, LiBr, Lil, CH₃OOLi, Li₂O, Li₂SO₄, lithium dicarboxylate salt, lithium citrate, fatty acid lithium salt, and alkyl lithium. Herein, a mole ratio of Li: (Ni+Co+Mn) may exceed about 1:1. Specifically, it may be about 1.01:1 to about 1.06:1, and more specifically about 1.02:1 to about 1.05:1.

In the step of obtaining the large-diameter particles, a doping material may be further mixed with the large-diameter metal hydroxide precursor, together with a lithium raw material. The doping material may include a compound including Ba, Mg, Al, Fe, Ti, W, B, Zr, or a combination thereof, and specifically, a compound including Al, Zr or a combination thereof.

This obtained powder mixture is primarily fired (heat-treated). Conditions of the primary firing are determined depending on compositions and used lithium raw materials. A temperature for the primary firing is in general greater than or equal to about 800 °C and less than or equal to about 1000 °C, preferably, less than or equal to about 950 °C, and more preferably less than or equal to about 900 °C. The temperature condition during the primary firing is maintained for a predetermined time and decreased down to about 10 °C to about 40 °C at a predetermined rate to complete the primary firing.

Subsequently, the small-diameter metal hydroxide precursor, the lithium raw material, and a raw material of lithium halide (LiX) are mixed and then, heat-treated to prepare a small-diameter particle including the lithium halide.

Small-diameter metal hydroxide precursor powder obtained through spray drying is mixed with the lithium raw material and then, sufficiently mixed with the raw material of lithium halide.

In the step of obtaining the small-diameter particle, a doping material along with the lithium raw material and the raw material of lithium halide may be further included in the small-diameter metal hydroxide precursor. The doping material may be a compound including Ba, Mg, Al, Fe, Ti, W, B, Zr, or a combination thereof and specifically, a compound including Al, Zr, or a combination thereof.

The types and mixing of the lithium raw material are the same as those described in the preparation of the large-diameter particles.

A raw material of lithium halide may include a fluorine-based polymer compound including polyvinylidene fluoride (PVdF), polyvinylidene fluoride-hexafluoropropylene copolymer (PVdF-co-HFP), or a combination thereof; or hydrogen fluoride, oxygen fluoride, hydrofluoric acid, hydrogen chloride, hydrochloric acid, chlorine oxide, chlorine fluoride oxide, bromine oxide, fluorosulfuric acid, bromine, hydrogen iodide, iodine oxide, periodic acid, etc., for example a compound including NH₄F, NH₄Cl, NH₄Br, NH₄I, LiF, LiCI, LiBr, Lil, MnF₂, MnCl₂, MnBr₂, MnI₂, or a combination thereof, and specifically, PVdF or LiF.

The raw material of the lithium halide (LiX) may be mixed in an amount of about 0.1 mol% to about 1 mol%, for example, about 0.2 mol% to about 0.8 mol%, based on a total amount of the small-diameter metal hydroxide precursor.

In contrast to the examples of the raw material of the lithium halide, lithium fluoride (LiF), has a very high melting point of greater than or equal to about 835 °C and thus is not well melted within a heat treatment temperature range (about 800 °C to about 900 °C), at which a high nickel-based positive active material is prepared, but exists as a solid-phase and thus may hardly be uniformly coated on the surface of the positive active material. However, when the LiF is mixed with the lithium raw material, compared with when LiF exists as a single phase, the melting point of LiF may be greatly lowered and thus exist in a melt state within the temperature range for preparing the high nickel-based positive active material and accordingly, may be uniformly coated as a film on the surface of the positive active material.

In addition, when the small-diameter particle is produced through the aforementioned process, the raw material of lithium halide reacts with the precursor and thus is permeated into the lithium nickel-based composite oxide secondary particle and coated as a film on the surface of the primary particles comprising the secondary particle as well as on the surface of the secondary particle during the process of preparing lithium nickel-based composite oxide.

The obtained powder mixture is secondarily fired (heat-treated). This secondary firing is performed under the same condition as that of the primary firing for preparing the large-diameter particle.

Subsequently, a positive active material according to an embodiment may be prepared by mixing the large-diameter particles and the small-diameter particles.

Another embodiment provides a rechargeable lithium battery including a positive electrode including the positive active material; a negative electrode including a negative active material; and an electrolyte.

The positive electrode includes a current collector and a positive active material layer formed on the current collector and including a positive active material.

In the positive active material layer, an amount of the positive active material may be about 90 wt% to about 98 wt% based on a total weight of the positive active material layer. In addition, the positive active material layer may further include a binder and a conductive material. Each amount of the binder and the conductive material may be about 1 wt% to about 5 wt% based on the total weight of the positive active material layer.

The positive active material is as described above.

The binder may include polyvinyl alcohol, carboxymethyl cellulose, hydroxypropyl cellulose, diacetyl cellulose, polyvinyl chloride, polyvinyl fluoride, polyvinylpyrrolidone, polyurethane, polytetrafluoroethylene, polyvinylidene fluoride, polyethylene, polypropylene, a styrene-butadiene rubber, an acrylated styrene butadiene rubber, an epoxy resin, nylon, and the like, but is not limited thereto.

Examples of the conductive material include carbon materials such as natural graphite, artificial graphite, carbon black, acetylene black, ketjen black, and a carbon fiber; a metal powder or a metal fiber including copper, nickel, aluminium, silver, and the like; a conductive polymer such as a polyphenylene derivative; or a mixture thereof.

The current collector may be an aluminium foil, a nickel foil, or a combination thereof, but is not limited thereto.

The negative electrode includes a current collector and a negative active material layer formed on the current collector and including a negative active material.

The negative active material may include a material that reversibly intercalates/deintercalates lithium ions, a lithium metal, a lithium metal alloy, a material capable of doping/dedoping lithium, or a transition metal oxide.

The material that reversibly intercalates/deintercalates lithium ions may include a carbonaceous material. The carbonaceous material may be any generally-used carbon-based negative active material in a rechargeable lithium ion battery. Examples thereof may be crystalline carbon, amorphous carbon, or a mixture thereof. The crystalline carbon may be non-shaped, or sheet, flake, spherical, or fiber shaped natural graphite or artificial graphite. The amorphous carbon may be a soft carbon, a hard carbon, a mesophase pitch carbonization product, fired coke, and the like.

The lithium metal alloy includes an alloy of lithium and a metal selected from Na, K, Rb, Cs, Fr, Be, Mg, Ca, Sr, Si, Sb, Pb, In, Zn, Ba, Ra, Ge, Al, and Sn.

The material capable of doping/dedoping lithium may be Si, SiOₓ (0 < x < 2), a Si-Q alloy (wherein Q is an element selected from an alkali metal, an alkaline-earth metal, a Group 13 element, a Group 14 element, a Group 15 element, a Group 16 element, a transition metal, a rare earth element, and a combination thereof, but is not Si), Sn, SnO₂, a Sn-R alloy (wherein R is an element selected from an alkali metal, an alkaline-earth metal, a Group 13 element, a Group 14 element, a Group 15 element, a Group 16 element, a transition metal, a rare earth element, and a combination thereof, but is not Sn), and the like. At least one of these materials may be mixed with SiO₂. The elements Q and R may be selected from Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, TI, Ge, P, As, Sb, Bi, S, Se, Te, Po, and a combination thereof.

The transition metal oxide may be vanadium oxide, lithium vanadium oxide, or lithium titanium oxide.

In the negative active material layer, the negative active material may be included in an amount of about 95 wt% to about 99 wt% based on the total weight of the negative active material layer.

In an embodiment, the negative active material layer includes a binder, and may optionally further include a conductive material. An amount of the binder in the negative active material layer may be about 1 wt% to about 5 wt% based on a total weight of the negative active material layer. When the negative active material layer further includes a conductive material, the negative active material layer includes about 90 wt% to about 98 wt% of the negative active material, about 1 wt% to about 5 wt% of the binder, and about 1 wt% to about 5 wt% of the conductive material.

The binder improves binding properties of negative active material particles with one another and with a current collector. The binder includes a non-water-soluble binder, a water-soluble binder, or a combination thereof.

The non-water-soluble binder may include a styrene-butadiene rubber, polyvinylchloride, carboxylated polyvinylchloride, polyvinylfluoride, an ethylenepropylene copolymer, polyacrylonitrile, polystyrene, polyurethane, polytetrafluoroethylene, polyvinylidene fluoride, polyethylene, polypropylene, polyamideimide, polyimide, or a combination thereof.

The water-soluble binder may include an acrylated styrene-butadiene rubber (SBR), an acrylonitrile-butadiene rubber, acrylic rubber, a butyl rubber, a fluorine rubber, an ethylene oxide-containing polymer, polyvinylpyrrolidone, polyepichlorohydrin, polyphosphazene, an ethylene propylene diene copolymer, polyvinylpyridine, chlorosulfonated polyethylene, latex, a polyester resin, an acrylic resin, a phenolic resin, an epoxy resin, polyvinyl alcohol, or a combination thereof.

When the water-soluble binder is used as a negative electrode binder, a cellulose-based compound may be further used as a thickener to provide viscosity. The cellulose-based compound includes one or more of carboxymethyl cellulose, hydroxypropylmethyl cellulose, methyl cellulose, or alkali metal salts thereof. The alkali metal may be Na, K, or Li. Such a thickener may be included in an amount of about 0.1 to about 3 parts by weight based on 100 parts by weight of the negative active material.

The conductive material may include: a carbon-based material such as natural graphite, artificial graphite, carbon black, acetylene black, ketjen black, a carbon fiber, and the like; a metal-based material of a metal powder or a metal fiber including copper, nickel, aluminium, silver, and the like; a conductive polymer such as a polyphenylene derivative; or a mixture thereof.

The current collector may include at least one selected from a copper foil, a nickel foil, a stainless steel foil, a titanium foil, a nickel foam, a copper foam, a polymer substrate coated with a conductive metal, and a combination thereof.

The electrolyte includes a non-aqueous organic solvent and a lithium salt.

The non-aqueous organic solvent serves as a medium for transmitting ions taking part in the electrochemical reaction of a battery.

The non-aqueous organic solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), methyl acetate, ethyl acetate, n-propyl acetate, dimethylacetate, methyl propionate, ethyl propionate, decanolide, mevalonolactone, caprolactone, dibutyl ether, tetraglyme, diglyme, dimethoxyethane, 2-methyltetrahydrofuran, tetrahydrofuran, cyclohexanone, ethanol, isopropyl alcohol, nitriles such as R-CN (wherein R may be a C2 to C20 linear, branched, or cyclic hydrocarbon group and R may include a double bond, an aromatic ring, or an ether bond), and the like, amides such as dimethyl formamide and the like, dioxolanes such as 1,3-dioxolane and the like, sulfolanes, and the like.

The organic solvent may be used alone or in a mixture of two or more, and a mixing ratio when used in a mixture of two or more may be appropriately adjusted according to the desired battery performance, which may be widely understood by those engaged in the field.

In addition, the organic solvent may further include an aromatic hydrocarbon-based organic solvent. Specific examples of the aromatic hydrocarbon-based organic solvent may be selected from benzene, fluorobenzene, 1,2-difluorobenzene, 1,3-difluorobenzene, 1,4-difluorobenzene, 1,2,3-trifluorobenzene, 1,2,4-trifluorobenzene, chlorobenzene, 1,2-dichlorobenzene, 1,3-dichlorobenzene, 1,4-dichlorobenzene, 1,2,3-trichlorobenzene, 1,2,4-trichlorobenzene, iodobenzene, 1,2-diiodobenzene, 1,3-diiodobenzene, 1,4-diiodobenzene, 1,2,3-triiodobenzene, 1,2,4-triiodobenzene, toluene, fluorotoluene, 2,3-difluorotoluene, 2,4-difluorotoluene, 2,5-difluorotoluene, 2,3,4-trifluorotoluene, 2,3,5-trifluorotoluene, chlorotoluene, 2,3-dichlorotoluene, 2,4-dichlorotoluene, 2,5-dichlorotoluene, 2,3,4-trichlorotoluene, 2,3,5-trichlorotoluene, iodotoluene, 2,3-diiodotoluene, 2,4-diiodotoluene, 2,5-diiodotoluene, 2,3,4-triiodotoluene, 2,3,5-triiodotoluene, xylene, and a combination thereof.

The electrolyte may further include an additive of vinylene carbonate or an ethylene carbonate-based compound as a cycle-life improvement additive.

Examples of the ethylene carbonate-based compound may be difluoro ethylenecarbonate, chloroethylene carbonate, dichloroethylene carbonate, bromoethylene carbonate, dibromoethylene carbonate, nitroethylene carbonate, cyanoethylene carbonate, fluoroethylene carbonate, and the like. The amount of the cycle-life improvement additive may be within an appropriate range.

The lithium salt dissolved in an organic solvent supplies a battery with lithium ions, basically operates the rechargeable lithium battery, and improves transportation of the lithium ions between a positive electrode and a negative electrode. Examples of the lithium salt include at least one supporting salt selected from LiPF₆, LiBF₄, LiSbF₆, LiAsF₆, LiN(SO₂C₂F₅)₂, Li(CF₃SO₂)₂N, LiN(SO₃C₂F₅)₂, LiC₄F₉SO₃, LiClO₄, LiAlO₂, LiAlCl₄, LiN(CₓF₂ₓ₊₁SO₂)(C_{y}F_{2y+1}SO₂), (wherein x and y are natural numbers, for example an integer of 1 to 20), LiCI, Lil, and LiB(C₂O₄)₂ (lithium bis(oxalato) borate, LiBOB). A concentration of the lithium salt may range from about 0.1 M to about 2.0 M. When the lithium salt is included at the above concentration range, an electrolyte may have excellent performance and lithium ion mobility due to optimal electrolyte conductivity and viscosity.

The rechargeable lithium battery may further include a separator between the negative electrode and the positive electrode, depending on a type of the battery. Examples of a suitable separator material include polyethylene, polypropylene, polyvinylidene fluoride, and multi-layers thereof such as a polyethylene/polypropylene double-layered separator, a polyethylene/polypropylene/polyethylene triple-layered separator, and a polypropylene/polyethylene/polypropylene triple-layered separator.

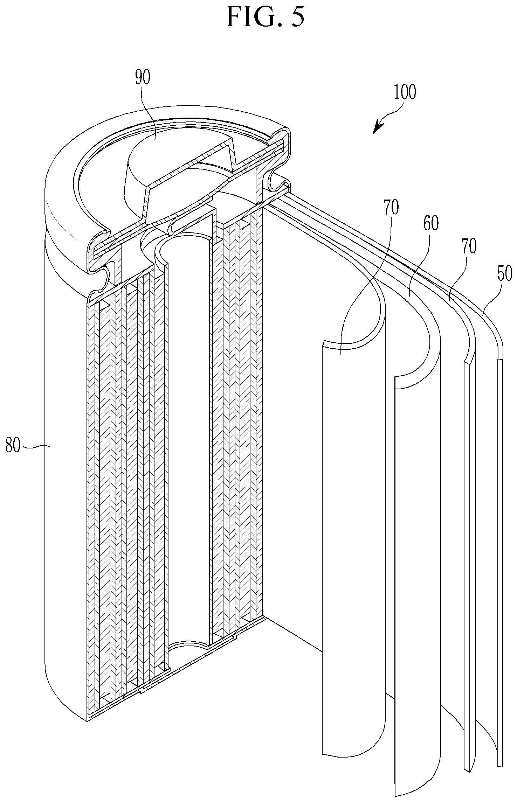

FIG. 5 is a perspective view schematically showing a typical structure of a rechargeable lithium battery according to an embodiment.

Referring to FIG. 5, a rechargeable lithium battery 100 includes a positive electrode 60 including a positive active material according to an embodiment, a negative electrode 50, and a separator 70. The positive electrode 60, the negative electrode 50, and the separator 70 described above are wound or folded to be accommodated in the battery case 80. Subsequently, an organic electrolyte is injected into the battery case 80 and sealed with a cap assembly 90 to complete the rechargeable lithium battery 100. The battery case 80 may be cylindrical, rectangular, thin-film, or the like.

The rechargeable lithium battery 100 may be a lithium ion battery.

A separator 70 may be disposed between the positive electrode 60 and the negative electrode 50 and wound or stacked to form an electrode assembly. When the electrode assembly is accommodated in the battery case 80, impregnated with an organic electrolyte, and the obtained product is sealed, the rechargeable lithium battery 100 is completed.

Also, the rechargeable lithium battery forms a battery pack with a circuit, and a single or multiple pack may be used for all devices requiring high capacity and high power as needed. For example, it may be used for a laptop, a smart phone, electric vehicle and so on. In addition, the rechargeable lithium battery has excellent storage stability, cycle-life characteristics, and high rate capability at high temperatures, and thus may be used in an electric vehicle (EV). For example, it may be used for a hybrid vehicle such as a plug-in hybrid electric vehicle (PHEV).

Hereinafter, examples of the present invention and comparative examples are described. These examples, however, are not in any sense to be interpreted as limiting the scope of the invention.

### Examples

### Synthesis Example 1: Synthesis of Large-diameter Metal Hydroxide Precursor (Ni_{0.6}Co_{0.2}Mn_{0.2}(OH)₂)

In the following preparing process, nickel sulfate, cobalt sulfate, and manganese sulfate were used as metal raw materials for forming metal hydroxide precursors. The synthesis was conducted sequentially in two steps.

### [First Step]

First, ammonia water (NH₃) having a concentration of 0.30 M was put in a reactor. While metal raw materials and a complex agent (ammonia water) were added thereto at concentration ratio of 9:1 at 50 °C under an agitation power of 1.5 kW/m³, a reaction was started. NaOH was added thereto to maintain pH between 10 and 11. Core particles obtained as a reaction result had an average size of about 5.5 µm to 6.5 µm. Thereafter, the second step was performed as follows.

### [Second Step]

The second step was performed according to the same method as the first step except that the agitation power was lowered to 1.0 kW/m³, a concentration ratio of the metal raw materials and the complex agent was changed to 7:1, and a concentration of the complex agent was changed to 0.35 M. Particles having a core and an intermediate layer produced from this reaction had an average size of 12 µm to 13 µm, and then, the reaction was terminated.

The resulting material was washed and hot air-dried at about 150 °C for 24 hours to obtain a large-diameter metal hydroxide precursor (Ni_{0.6}Co_{0.2}Mn_{0.2}(OH)₂).

### Synthesis Example 2: Synthesis of Small-diameter Metal Hydroxide Precursor (Ni_{0.6}Co_{0.2}Mn_{0.2}(OH)₂)

In the following preparing process, nickel sulfate, cobalt sulfate, and manganese sulfate were used as metal raw materials for forming metal hydroxide precursors.

Ammonia water (NH₃) having a concentration of 0.30 M was put in a reactor. While metal raw materials and a complex agent (ammonia water) were added thereto at concentration ratio of 5:1 at 40 °C under an agitation power of 2.0 kW/m³, a reaction was started. NaOH was added thereto to maintain pH between 12 and 13. Core particles obtained as a reaction result had an average size of about 2.5 µm to 3.0 µm and then, the reaction was terminated. The resulting material was washed and hot air-dried at about 150 °C for 24 hours to obtain a small-diameter metal hydroxide precursor (Ni_{0.6}Co_{0.2}Mn_{0.2}(OH)₂).

### Example 1-1

### (1) Preparation of Positive Active Material

### (i) Preparation of Large-diameter Secondary Particle

The large-diameter metal hydroxide precursor of Ni_{0.6}Co_{0.2}Mn_{0.2}(OH)₂ according to Synthesis Example 1 and LiOH were mixed in a mole ratio of 1 : 1 and heat-treated to obtain a large-diameter secondary particle including lithium nickel-based composite oxide (LiNi_{0.6}Co_{0.2}Mn_{0.2}O₂). The heat treatment was performed by increasing a temperature from 25 °C up to 830 °C at 2.0 °C/min under an oxygen atmosphere, keeping the temperature at 830 °C for 6 hours, and decreasing it down to from 830 °C to 25 °C at 2.0 °C/min.

### (ii) Preparation of Small-diameter Secondary Particle

The small-diameter metal hydroxide precursor of Ni_{0.6}Co_{0.2}Mn_{0.2}(OH)₂ according to Synthesis Example 2, LiOH, and LiF were mixed in a mole ratio of 1 : 1 : 0.0025 and heat-treated to obtain a small-diameter secondary particle including lithium nickel-based composite oxide (LiNi_{0.6}Co_{0.2}Mn_{0.2}O₂) and LiF. The heat treatment was performed by increasing a temperature from 25 °C to 830 °C at 2.0 °C/min under an oxygen atmosphere, keeping it at 830 °C for 6 hours, and decreasing it down from 830 °C to 25 °C at 2.0 °C/min.

### (iii) Preparation of Positive Active Material

The large-diameter secondary particle (D50: 11.7 µm) and the small-diameter secondary particle (D50: 2.8 µm) were mixed in a weight ratio of 7:3 to prepare a positive active material. Average particle diameters (D50) of the large-diameter secondary particle and the small-diameter secondary particle were measured by using a PSD (particle size distribution)-measuring device.

### (2) Manufacture of Coin Cell

The positive active material, carbon black carbon conductive agent (Product Name: Denka Black, Denka Korea Co., Ltd.), and polyvinylidene fluoride (PVdF) were mixed in a weight ratio of 92:4:4 and then, with N-methylpyrrolidone (NMP) to prepare slurry. The slurry was bar-coated on a 15 µm-thick aluminium current collector, dried at room temperature and then, at 120 °C under vacuum, compressed, and punched to manufacture a 45 µm-thick positive electrode plate.

The positive electrode plate, lithium metal as a counter electrode, a PTFE separator, and a solution prepared by dissolving 1.3 M LiPF₆ in a mixed solvent of EC (ethylene carbonate), DEC (diethyl carbonate), and EMC (ethylmethylcarbonate) (in a volume ratio of 3:4:3) as an electrolyte were used to manufacture a coin cell.

### Example 1-2

A coin cell was manufactured according to the same method as Example 1-1 except that the small-diameter metal hydroxide precursor of Ni_{0.6}Co_{0.2}Mn_{0.2}(OH)₂ according to Synthesis Example 2, LiOH, and LiF were mixed in a mole ratio of 1 : 1 : 0.005 to prepare a positive active material.

### Example 1-3

A coin cell was manufactured according to the same method as Example 1-1 except that the small-diameter metal hydroxide precursor of Ni_{0.6}Co_{0.2}Mn_{0.2}(OH)₂ according to Synthesis Example 2, LiOH, and LiF were mixed in a mole ratio of 1 : 1 : 0.0075 to prepare a positive active material.

### Example 2-1

A positive active material and a coin cell were manufactured according to the same method as Example 1-1 except that the heat treatment temperatures of (i) the large-diameter secondary particle and the heat treatment of (ii) the small-diameter secondary particle were changed into 850 °C.

### Example 2-2

A positive active material and a coin cell were manufactured according to the same method as Example 1-1 except that the heat treatment temperatures of (i) the large-diameter secondary particle and the (ii) small-diameter secondary particle were changed into 850 °C, and the small-diameter metal hydroxide precursor of Ni_{0.6}Co_{0.2}Mn_{0.2}(OH)₂ according to Synthesis Example 2, LiOH, and LiF were mixed in a mole ratio of 1 : 1 : 0.005.

### Example 2-3

A positive active material and a coin cell were manufactured according to the same method as Example 1-1 except that the heat treatment temperatures of (i) the large-diameter secondary particle and the (ii) small-diameter secondary particle were changed into 850 °C, and the small-diameter metal hydroxide precursor of Ni_{0.6}Co_{0.2}Mn_{0.2}(OH)₂ according to Synthesis Example 2, LiOH, and LiF were mixed in a mole ratio of 1 : 1 : 0.0075.

### Example 3

A small-diameter single crystal positive active material (Product Name: Xiamen Tungsten Co., Ltd.) and a LiF were mixed in a mole ratio of 1 : 0.025, and heat-treated to obtain a small-diameter single crystal particle including lithium nickel-based composite oxide LiNi_{0.83}Co_{0.11}Mn_{0.06}O₂ and LiF. The heat treatment was performed by increasing a temperature from 25 °C to 850 °C at 2.0 °C/min under an oxygen atmosphere, keeping it at 850 °C for 6 hours, and decreasing it down from 850 °C to 25 °C at 2.0 °C/min.

The large-diameter secondary particle (D50: 11.7 µm) according to the step (i) of Example 1-1 and the small-diameter single crystal particle (D50: 2.8 µm) were mixed in a weight ratio of 7:3 to prepare a positive active material. Average particle diameter (D50) of the small-diameter single crystal particle was measured by using a PSD (particle size distribution)-measuring device.

The positive active material was used according to the same method as step (2) of Example 1-1 to manufacture a coin cell.

### Comparative Example 1

A positive active material was prepared by mixing the large-diameter metal hydroxide precursor according to Synthesis Example 1 and the small-diameter metal hydroxide precursor according to Synthesis Example 2 in a weight ratio of 7:3, mixing this mixture with LiOH in a mole ratio of Li:metal (transition metal) = 1 : 1, and then, heat-treating the obtained mixture. The heat treatment was performed by increasing a temperature from 25 °C to 830 °C at 2.0 °C/min under an oxygen atmosphere, keeping it at 830 °C for 6 hours, and decreasing down from 830 °C to 25 °C at 2.0 °C/min.

The positive active material was used according to the same method as step (2) of Example 1-1 to manufacture a coin cell.

### Comparative Example 2

A positive active material and a coin cell were manufactured according to the same method as Comparative Example 1 except that the heat treatment was performed at 850 °C.

### Comparative Example 3

The positive active material of Comparative Example 2 and PVDF were mixed in a mole ratio of 1:0.0075 and then, heat-treated to obtain a final positive active material. The heat treatment was performed by increasing a temperature from 25 °C to 400 °C at 2.0 °C/min under an oxygen atmosphere, keeping it at 400 °C for 6 hours, and decreasing it down from 400 °C to 25 °C at 2 °C/min.

The positive active material was used according to the same method as step (2) of Example 1-1 to manufacture a coin cell.

### Comparative Example 4

The large-diameter metal hydroxide precursor of Synthesis Example 1 and the small-diameter metal hydroxide precursor of Synthesis Example 2 was mixed in a weight ratio of 7:3 to prepare a mixed precursor, and the mixed precursor, LiOH, and LiF were mixed in a mole ratio of 1 : 1 : 0.0075 and then, heat-treated to prepare a positive active material including the small-diameter secondary particle, the large-diameter secondary particle, and LiF. The heat treatment was performed by increasing a temperature from 25 °C to 850 °C at 2.0 °C/min under an oxygen atmosphere, keeping it at 850 °C for 6 hours, and decreasing it from 850 °C to 25 °C at 2.0 °C/min.
The prepared positive active material was used according to the same method as step (2) of Example 1-1 to manufacture a coin cell.

### Comparative Example 5

A positive active material was prepared according to the same method as Comparative Example 4 except that the large-diameter metal hydroxide precursor of Synthesis Example 1 and the small-diameter metal hydroxide precursor of Synthesis Example 2 were used in a weight ratio of 7:3, this mixed precursor was mixed with LiOH and LiF in a mole ratio of 1 : 1 : 0.025.

The prepared positive active material was used according to the same method as step (2) of Example 1-1 to manufacture a coin cell.

### Evaluation 1

The positive active materials according to Examples 1-1 to 1-3 and 2-1 to 2-3, Example 3 and Comparative Examples 1 to 5 were examined with respect to the firing temperatures and the LiF contents through X-ray diffraction analysis (Scan rate: 0.96 degrees/min, Scan step: 0.01 degree 2θ, Scan range: 10 to 90 degrees) by using Cu Kα ray. Full widths at half maximum of (003) plane XRD peaks and c-axis lattice constants were measured, and the results are shown in Table 1.

**(Table 1)**

| | Firing temperat ure (°C) | LiF content (mol) (based on 100 mol of small-diameter secondary particle) | Full width at half maximum of (003) plane of XRD peak (degree) | c-axis lattice constant (Å) |
|---|---|---|---|---|
| Example 1-1 | 830 | 0.25 | 0.1658 | 14.245 |
| Example 1-2 | 830 | 0.5 | 0.1650 | 14.247 |
| Example 1-3 | 830 | 0.75 | 0.1642 | 14.246 |
| Example 2-1 | 850 | 0.25 | 0.1537 | 14.238 |
| Example 2-2 | 850 | 0.5 | 0.1535 | 14.235 |
| Example 2-3 | 850 | 0.75 | 0.1543 | 14.238 |
| Example 3 | 850 | 0.25 | 0.1301 | 14.230 |
| Comparative Example 1 | 830 | - | 0.1856 | 14.245 |
| Comparative Example 4 | 850 | 0.75 | 0.1454 | 14.241 |

Referring to Table 1, the full widths at half maximum of the (003) plane XRD peaks of the positive active materials of Examples 1-1 to 1-3 were decreased, compared with that of the positive active material of Comparative Example 1, and this result shows that sizes of the primary particles included in the small-diameter secondary particles of the positive active materials of Examples 1-1 to 1-3 were increased.

Specifically, when the full widths at half maximum of the (003) plane XRD peaks of the positive active materials Examples 1-1 to 1-3 were examined, as the LiF content was increased, the sizes of the primary particles included in the small-diameter secondary particles were increased, and when the full widths at half maximum of the (003) plane XRD peaks of the positive active materials Examples 1-1 and 2-1 were examined, even though the firing temperature was increased, the sizes of the primary particles included in the small-diameter secondary particles were also increased.

In addition, since the c-axis lattice constants according to Examples 1-1 to 1-3, Examples 2-1 to 2-3 and Example 3 exhibited almost no changes, even though the LiF content or the firing temperature was increased, the positive active materials were suppressed from structural changes due to expansions toward the c axis, and accordingly, cycle-life characteristics of the battery cells including the positive active materials according to the examples were improved. On the contrary, the positive active material of Comparative Example 4 exhibited greatly deteriorated full width at half maximum of the (003) plane XRD peak compared with the positive active materials of the examples, and accordingly, since the large-diameter secondary particle and the small-diameter secondary particle of the positive active material according to Comparative Example 4 exhibited increased sizes and excessively included LiF, cycle-life characteristics of the battery cell was deteriorated.

### Evaluation 2

Unreacted residual lithium on the surfaces of the positive active materials of Examples 1-1 to 1-3 and 2-1 to 2-3, Example 3 and Comparative Examples 1 and 2 was measured in a HCI titration method, and the results are shown in Table 2.
The unreacted residual lithium was measured as follows. 10 g of each positive active material was put in 100 ml of distilled water and then, stirred at 300 rpm for 30 minutes, and pH thereof was measured by partially taking the solutions, while HCI was respectively adding thereto. Since the unreacted residual lithium was present in forms of Li₂CO₃ and LiOH, when HCI was added thereto, H⁺, CO₃²⁻, and OH⁻ ions reacted and titrated the solutions, wherein the input amounts of the HCI solutions were measured to calculate non-reaction residual lithium contents.

**(Table 2)**

| | Content of residual lithium (Li content in Li₂CO₃ & LiOH/ ppm) |
|---|---|
| Example 1-1 | 1346 |
| Example 1-2 | 1263 |
| Example 1-3 | 1225 |
| Comparative Example 1 | 1451 |
| Example 2-1 | 1245 |
| Example 2-2 | 1187 |
| Example 2-3 | 1142 |
| Example 3 | 1262 |
| Comparative Example 2 | 1409 |

| | |
|---|---|
| Referring to Table 2, the positive active materials of Examples 1-1 to 1-3 and 2-1 to 2-3, and Example 3 exhibited reduced residual lithium contents, compared with Comparative Examples 1 and 2 including no lithium halide. | |

### Evaluation 3

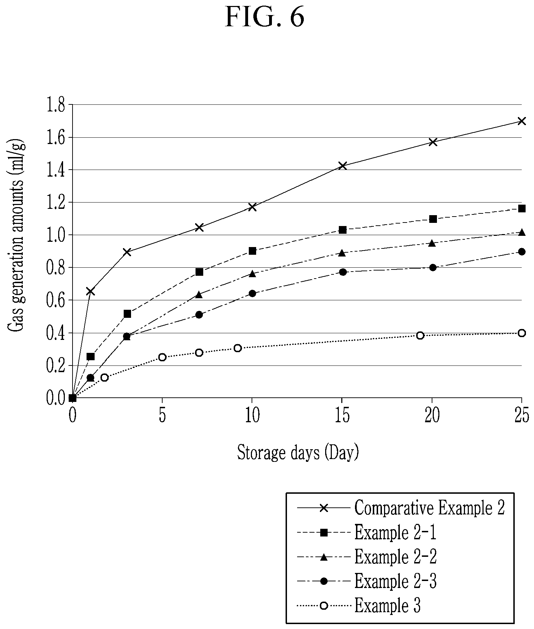

The coin cells according to Examples 2-1 to 2-3, Example 3 and Comparative Example 2 were constant current-charged at a current rate of 0.1 C up to a voltage of 4.3 V (vs. Li) and subsequently, cut off at a 0.05 C rate, while kept at 4.3 V in the constant voltage mode, at room temperature (25 °C) at the 1st cycle. The charged battery cells were disassembled, five positive electrode plates buffered at 4.3 V were put together with an electrolyte solution in a pouch and then, stored in an 80 °C oven, and then, volume changes of the pouch were measured and converted into mass changes in an Archimedes method. The results are shown in FIG. 6.

Referring to FIG. 6, the cells of Examples 2-1 to 2-3 and Example 3 exhibited reduced gas generation due to a side reaction compared with the cell of Comparative Example 2 including no lithium halide in the small-diameter particle.

While this disclosure has been described in connection with what is presently considered to be practical embodiments, it is to be understood that the invention is not limited to the disclosed embodiments, but, on the contrary, is intended to cover various modifications and equivalent arrangements included within the scope of the appended claims.

**<Description of Symbols>**

| | | | |
|---|---|---|---|
| 1: | positive active material | | |
| 1a: | positive active material | | |
| 10: | small-diameter secondary particle | | |
| 10a: | small-diameter single crystal particle | | |
| 11: | small-diameter primary particle | | |
| 13: | lithium halide | | |
| 20: | large-diameter secondary particle | | |
| 21: | large-diameter primary particle | | |
| 100: | rechargeable lithium battery | | |
| 50: | negative electrode | 60: | positive electrode |
| 70: | separator | 80: | battery case |
| 90: | cap assembly | | |

## Claims

1. A positive active material for a rechargeable lithium battery, comprising
a lithium nickel-based composite oxide including a large-diameter particle and a small-diameter particle having different average particle diameters,
wherein the large-diameter particle includes secondary particles including a plurality of primary particles,
the small-diameter particle includes lithium halide, and
the large-diameter particle has an average particle diameter (D50) of 10 µm to 20 µm, and the small-diameter particle has an average particle diameter (D50) of 1 µm to 8 µm.

2. A positive active material according to claim 1, wherein the small-diameter particle comprises secondary particles including a plurality of primary particles.

3. A positive active material according to claim 1 or claim 2, wherein the small-diameter particle comprises single crystal particles.

4. A positive active material according to any one of claims 1 to 3, wherein the large-diameter secondary particle comprises primary particles having an average thickness of 100 nm to 200 nm.

5. A positive active material according to claim 2, wherein the small-diameter secondary particle comprises primary particles having an average thickness of 200 nm to 500 nm.

6. A positive active material according to any one of claims 1 to 5, wherein the large-diameter particle is included in an amount of 50 wt% to 90 wt% based on a total weight of the large-diameter particle and the small-diameter particle.

7. A positive active material according to any one of claims 1 to 6, wherein the lithium halide is coated on the surface of the small-diameter particle, optionally wherein the lithium halide is coated in the form of a film on the surface of the small-diameter particle.

8. A positive active material according to any one of claims 1 to 7, wherein the lithium halide comprises LiF.

9. A positive active material according to any one of claims 1 to 8, wherein:
(i) the lithium halide is included in an amount of 0.1 mol to 1.0 mol based on 100 mol of the small-diameter particle; and/or
(ii) the large-diameter particle comprises secondary particles in which a plurality of plate-shaped primary particles are aggregated and has a regular array structure in which (003) planes of the primary particles are oriented in a direction perpendicular to the surface of the secondary particles.

10. A positive active material according to claim 2, wherein the small-diameter particle comprises secondary particles in which a plurality of plate-shaped primary particles are aggregated and has a regular array structure in which (003) planes of the primary particles are oriented in a direction perpendicular to the surface of the secondary particles.

11. A positive active material according to any one of claims 1 to 10, wherein the positive active material has a full width at half-maximum (FWHM) of a (003) plane peak in an X-ray diffraction spectrum analysis of 0.15° to 0.17°.

12. A positive active material according to claim 9, wherein the large-diameter secondary particle has a one-centered radial arrangement having one center or a multi-centered radial array structure having a plurality of centers.

13. A positive active material according to claim 10, wherein the small-diameter particle has a one-centered radial arrangement having one center or a multi-centered radial array structure having a plurality of centers.

14. A positive active material according to any one of claims 1 to 13, wherein the lithium nickel-based composite oxide is a compound represented by Chemical Formula 1:
[Chemical Formula 1] LiₐNiₓCo_{y}M_{1-x-y}O₂
wherein, in Chemical Formula 1, 0.9 ≤ a ≤ 1.05, 0.3 ≤ x ≤ 0.95, 0.05 ≤ y ≤0.3, and M is at least one metal element selected from Mn, Al, Cr, Fe, V, Mg, Ti, Zr, Nb, Mo, W, Cu, Zn, Ga, In, Sn, La, and Ce.

15. A positive active material according to any one of claims 1 to 14, wherein:
(i) the positive active material comprises 1,400 ppm or less of residual lithium on the surface; and/or
(ii) the positive active material has a mixture density of 3.1 g/cm³ to 3.4 g/cm³.

16. A method of preparing a positive active material for a rechargeable lithium battery, comprising
preparing a large-diameter metal hydroxide precursor and a small-diameter metal hydroxide precursor;
mixing the large-diameter metal hydroxide precursor and a lithium raw material and heat-treating the mixture to prepare a large-diameter particle;
mixing the small-diameter metal hydroxide precursor, a lithium raw material, and a raw material of lithium halide (LiX) and heat-treating the mixture to prepare a small-diameter particle including lithium halide; and
mixing the large-diameter particle and the small-diameter particle to prepare a positive active material.

17. A rechargeable lithium battery comprising
a positive electrode including a positive active material according to any one of claims 1 to 15;
a negative electrode including a negative active material; and
an electrolyte.
